# EUROPEAN PATENT SPECIFICATION

(11) **EP 2 702 877 B1**
(45) Date of publication and mention of the grant of the patent: **09.12.2015**
(21) Application number: 13180754.7
(22) Date of filing: 16.08.2013
(51) Int. Cl.: A23L 1/317

(54) **A SAUSAGE**
WÜRSTCHEN
SAUCISSE

(30) Priority: 28.08.2012 SE 1250957
(43) Date of publication of application: 05.03.2014
(73) Proprietor: Wande, Martin, 155 34 Nykvarn (SE)
(72) Inventor: Wande, Martin, 155 34 Nykvarn (SE)
(74) Representative: Reyier, Ann-Mari

(56) References cited:
- EP-A1- 1 464 224
- EP-A1- 1 964 474
- WO-A1-2005/112651
- WO-A1-2008/008842
- CN-U- 201 595 147
- DE-A1- 10 318 095
- DE-U1- 8 505 466
- GB-A- 341 760
- GB-A- 417 756
- US-A- 3 645 748
- US-A1- 2007 071 877

## Description

### Field of the invention

The present invention relates to a sausage intended to be heated before eating. Preferably, it refers to a sausage intended to be heated up by grilling or frying.

### Prior art

Sausages intended to be heated prior to consumption is traditionally elongated along a length axis with a circular sectional area transverse the length axis. One problem when frying or grilling sausages with a circular sectional area is that they can roll during frying or grilling, which makes it difficult to obtain a uniform heating of the sausage. If the sausage is heated unevenly, there is a risk that the sausage is burned before it is fully cooked. It is desirable to provide a sausage which enables quick and efficient heating of the sausage with reduced risk that the sausage is burned compared to traditional sausages with circular sectional area.

Another problem with traditional round sausages is that they often bend when they are fried/grilled. When such a round sausage has been bent, it becomes very difficult to place so that all sides become evenly fried.

WO 98/04155 discloses a process for preparing food products for freezing, thawing, and/or cooking. The problem to be solved by the invention is to minimize the time for said processes. This is achieved by giving the food product an elongated shape along a length axis with a triangular sectional area transverse to the length axis. With such a sectional area a shorter maximal distance is obtained for the same sectional area between the food product surface and a point inside the food product, compared to food products according to the prior art described. The exemplified food product is fries.

US2007/0071877 discloses a Frankfurter sausage that has a triangular sectional area across the length axis. The purpose of the sausage section is to reduce the risk of suffocation if a consumer puts a piece of sausage in his throat. With a triangular sectional area the idea is that air gaps are formed between the piece of sausage and the trachea.

DE 103 18 095 discloses a Salami product with a triangular cross-section and a plurality of inwardly curved indentations along the length of the product.

WO 2005/112651 discloses an elongated meat loaf product with three sides and a triangular cross-section, which is constant along the length of the product.

DE 85 05 466 discloses an elongated sausage with three sides and a triangular cross-section, which is constant along the length of the product, and rounded corners.

EP 1464 224 discloses a sausage product with a triangular cross-section with rounded corners.

WO 2008/008842 discloses a sausage with a triangular cross-section and rounded corners.

CN 201595 147 discloses an elongated prism-shaped ham sausage with a triangular cross-section with three equal sides and rounded corners.

EP 1964 474 discloses an elongated sausage with prism-shaped cross-section.

GB 341 760 and GB 417 756 also disclose a sausage with triangular cross-section.

US 3 645 748 discloses an uncooked strip of extruded potato strip having an elongated body and a triangular cross-section with sides of equal length and rounded corners, further comprising three concave long sides. The concave sides of the uncooked potato strip are provided to allow for swelling of the potato strip upon deep frying, i.e. the strip is lowered in a container of hot oil.

### Summary of the invention

An object of the invention is to provide a sausage which enables quick and efficient heating of the sausage.

Another object of the present invention is to provide a sausage which can easily be turned round on a grill or a pan, and which minimizes the risk to roll uncontrollably on the grill.

Those objects are achieved by a sausage as defined in claim 1.

A sausage according to the invention is intended to be fried or grilled and includes a length axis. The sausage is elongated along the length axis and has a sectional area transverse to the length axis. The sausage includes an elongated body comprising three long sides extending in the longitudinal direction of the body, and the body has a generally triangular sectional area. Each of the three long sides is provided with an inwardly bent indentation extending along the long side in the longitudinal direction of the body, so that the sausage has three stable rest positions on a plane surface.

A generally triangular sectional area is defined by a periphery of the sectional area having six points which in pairs may be connected with straight lines, which lines form a triangle that entirely encloses the sectional area of the sausage. According to the invention, the periphery of the sectional area has an indentation between the pair of points.

An advantage of a sausage according to the invention is that the distance between the center of the sausage and the surface is less than for sausages in the prior art for a given sectional area of the sausage. This means that the heating of the sausage gets faster.

Further, a sausage according to the invention facilitates grilling of the sausages, compared to sausages of the prior art because the sausage has three stable rest positions. Sausages which are intended to be heated before eating often contains sausage products that swell up when heated. Thanks to the indentations between the points that define the stable rest positions on the sausage, the stable rest positions are maintained even when the sausage swells up.

A sausage according to the invention thus has only three stable rest positions on a plane surface.

Preferably, the sectional area of the sausage is constant along a main part of the length of the sausage.

The distance of the longest side of the triangle is in the following denoted L. The largest distance between a line on the triangle and the periphery of the sectional area of the sausage may be in the interval of 1-15% of L, preferably in the interval of 2-10% of L, and most preferably in the interval of 5-8% L. This is a suitable size of indentation, which gives advantageous results from a heating point of view. Although the indentation may differ in size on different sides of the sausage, it is advantageous that the indentations are substantially equal on all sides.

The indentation can have any of many different shapes. An advantageous shape of the indentation is that it has the shape of a circular segment. Such a shape is advantageous in the case that the sausage will swell when heated.

If the sausage indentation has the shape of a circular segment, the indentation can have a bending radius in the interval of 5-100 mm and preferably in the interval of 10-60 mm. Of course, the bending radius must be adapted to the dimensions of the sausage. Although the various indentations may have different bending radius, it is advantageous that they are equal, so that the heating of the sausage becomes uniform.

The sectional area of the sausage may have dimensions such that the longest side of the triangle have a length in the interval 15-100 mm, and preferably in the interval of 20-60 mm. Advantageously, the sausage is symmetrical so that the triangle is equilateral.

The sausage may be arranged so that the distance between one of the triangle corners and the periphery of the sectional area of the sausage is in the interval of 5-20% of the triangle's longest side, and preferably in the interval of 5-15% of the triangle's longest side. Too sharp corners on the sausage may lead to the corners get burned.

The sausage portions closest to the corners of the triangle may have the form of circular segments with a bending radius in the interval of 1-30 mm and preferably in the interval of 2-10 mm.

According to an embodiment of the invention, the body has three curved corners extending in the longitudinal direction of the body, and the curved corners have a bending radius in the interval of 1 - 30mm, and preferably in the interval of 2 - 10mm. The curved corners form corners in the triangle.

The sausage portions closest to the corners of the triangle may have a different shape than the shape of a circular segment. For example, said portions can be substantially flat.

The triangle may be substantially equilateral and all indentations have substantially the same shape. Also, all corners have the same form. Thereby a sausage is obtained that conveniently can be uniformly heated.

### Brief Description of the Drawings

It will follow a detailed description of embodiments of the invention with reference to the accompanying drawings, in which:
Figure 1 is a perspective view of a sausage according to an embodiment of the invention.
Figure 2 shows the sausage of Figure 1 in a cross-sectional view.
Figure 3 shows the sectional area of a sausage according to an alternative embodiment of the present invention.
Figure 4 shows the sectional area of a sausage according to an alternative embodiment of the present invention.
Figure 5 shows the sectional area of a sausage according to an alternative embodiment of the present invention.
Figure 6 shows a side view and a cross-sectional view of a sausage according to an alternative embodiment of the present invention.
Figure 7 shows a side view and a cross-sectional view of a sausage according to an alternative embodiment of the present invention.

### Description of preferred embodiments of the invention

In the following description of preferred embodiments of the invention corresponding features in the different figures will be denoted by the same reference numeral. The attached figures are not made to scale, but indicate the principles of the invention.

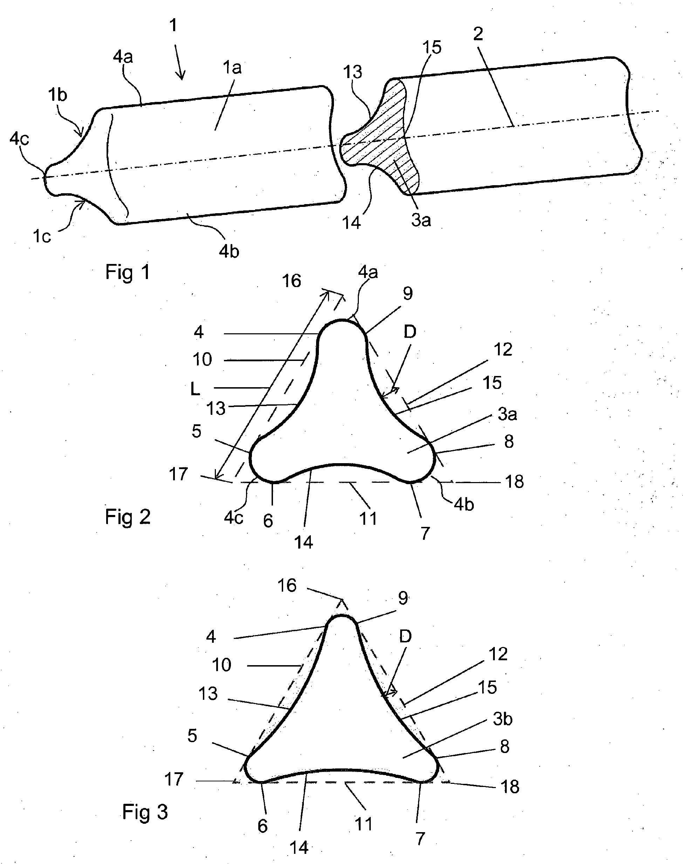

Figure 1 is a perspective view of a sausage according to an embodiment of the invention. The sausage is intended to be fried or grilled. The sausage includes an elongated body 1 comprising three long sides 1a-c extending in the longitudinal direction of the body. The sausage has a length axis 2 along which the sausage is elongated. The sausage is shown with a middle portion removed so that the sausage sectional area 3a is visible. The sectional area 3a of the body is generally triangular. Figure 2 shows the sausage in figure 1 in a cross-section transverse to the length axis 2. Each of the three long sides 1a-c is provided with an inwardly bent indentation 13, 14, 15 extending along the length of the long side and in parallel with the length axis 2. The body has three curved corners 4a-c extending in the longitudinal direction of the body, and the curved corners have a bending radius in the interval of 1 - 30mm, and preferably in the interval of 2 - 10mm.

The sausage sectional area 3a has six points 4, 5, 6, 7, 8, 9, which in pairs can be connected with straight lines 10, 11, 12, which form a triangle which completely encloses the sausage sectional area 3a. The periphery of the sectional area 3a has an indentation 13, 14, 15, between said pair of points, so that the sausage has three stable rest positions on a plane surface. The triangle in Figure 2 is equilateral, but it is possible to give the sausage a different form so that the triangle is not equilateral. However, it is advantageous that the sausage has the disclosed shape, since the sausage will then be stable in all three positions. The longest side of the sides 10, 11, 12 of the triangle has a length L, which is the same for all sides of the triangle of Figure 2. The distance between one of the lines and the periphery of the sectional area 3a of the sausage is denoted by D and is in the interval of 1-15% of L, preferably in the interval of 2-10% of L, and more preferably in the interval of 5-8% of L. In the shown embodiment, D is the same for all three lines. In the shown embodiment, the indentations have the shape of a circular segment. If the indentation has the shape of a circular segment, it is advantageous if it has a bending radius in the interval of 5-100 mm and preferably in the interval 10-60 mm.

The sausage may be arranged so that the distance between one of the corners of the triangle 16, 17, 18 and the periphery of the sectional area 3a of the sausage is in the interval of 5-20% of the longest side of the triangle, and preferably in the interval of 5-15% of the longest side of the triangle. Advantageously, the sausage is symmetric so that all three distances from a corner of the triangle to the sausage is the same. In the shown embodiment, the portion of the sausage closest to the corners of the triangle has the shape of a circular segment and has a bending radius in the interval of 1-30 mm and preferably in the interval of 2-10 mm.

The sausage may be arranged so that the distances between the points 4 and 5, 6 and 7, and 8 and 9 define lines long enough to construct a stable surface. If the distance is too small, there is a risk that the support surface becomes unstable so that the sausage can roll uncontrollably on the grill. The distances between the points 4 and 5, 6 and 7, and 8 and 9 should preferably be at least 33% and most preferably at least 40% of the length of the longest side L. This means that the sausage can be steady without any risk that it rolls on a plane surface.

Preferably, the longest side of the triangle has a length in the interval 15-100 mm, and most preferably in the interval of 20-60 mm.

Figure 3 shows the sectional area 3b of a sausage according to an alternative embodiment in which the indentations has a different shape.

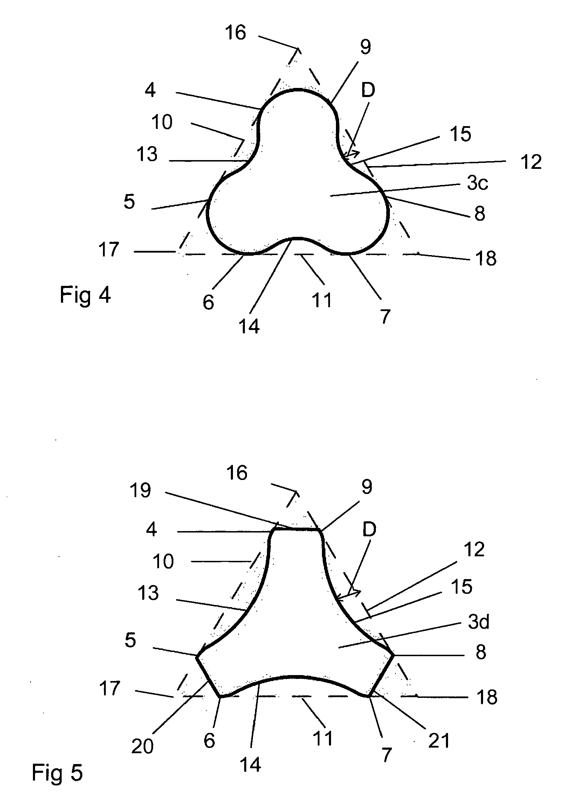

Figure 4 shows the sectional area 3c of a sausage according to an alternative embodiment in which the indentations has a different shape.

Figure 5 shows the sectional area 3d of a sausage according to an alternative embodiment of the present invention in which the sausage has substantially plane surfaces 19-21 closest to the corners 16-18 of the triangle. However, the sausage has, like other embodiments three stable rest positions.

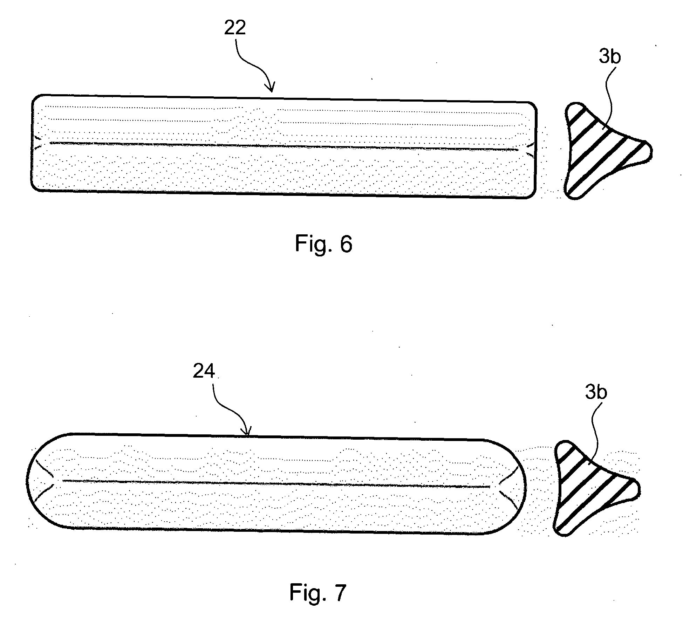

The shape of the ends of the sausage may be varied. Figure 6 and figure 7 each shows a side view of a sausage and an example of a sectional area according to other embodiments of the invention of the sausage. The sausage shown in figure 6 has a body 22 with straight ends. The sausage shown in figure 7 has a body 24 with curved ends. The figures show that the sausage ends may be varied.

When grilling a sausage according to the invention, the sausage can be put stable on one of the side defined by the triangle. When the grilling of the sausage is completed it is turned to the other two sides in turn. Due to the indentations 13, 14, 15 the stable rest positions are maintained even if the sausage swells during heating.

Sausage food products can be prepared in various geometric forms in many different ways. One suitable method to produce a sausage according to the invention is to use extrusion, with or without skin, with subsequent heat treatment to maintain/stabilize the shape. Extrusion is a normal procedure in the production of the most common type of sausages intended for grilling. Another method to produce a sausage according to the invention is to use sausage skins filled with emulsified batter in a traditional way, which are pressed together during subsequent heat treatment to maintain/stabilize the desired shape. However, it is also possible to use other methods for producing a sausage according to the invention.

The present invention is not limited to the embodiments disclosed but may be varied and modified within the scope of the following claims. For example, it is possible to provide indentations having slightly different shapes than the indentations shown in the embodiments. What is essential is that stable resting positions are retained even if the sausage swells.

## Claims

1. A sausage including an elongated body (1;22;24) comprising three long sides (1a-c) extending in the longitudinal direction of the body, and the body has a triangular sectional area (3a;3b;3c;3d), the periphery of the sectional area of the body has six points (4,5,6,7,8,9), which in pairs can be connected with straight lines (10,11,12), which lines form a triangle that entirely encloses the sectional area of the sausage, and each of said three long sides is provided with an inwardly bent indentation (13,14,15) extending along the long side in the longitudinal direction of the body and each of said indentations (13,14,15) extends between a pairs of said points so that the sausage has three stable rest positions on a plane surface, and a longest side of said triangle has a length L in the interval of 20 - 60mm, **characterized in that** at least a part of each of said indentations has the shape of a circular segment, and the largest distance (D) between said straight lines and the periphery of a sectional area (3a;3b;3c;3d) of the sausage is in the interval of 5 - 8% of L.

2. The sausage according to claim 1, wherein the sectional area (3a;3b;3c;3d) of the sausage is constant along a main part of the length of the sausage.

3. The sausage according to any of the previous claims, wherein said indentations (13,14,15) have the same shape.

4. The sausage according to any of the previous claims, wherein the body (1;22;24) has three curved corners (4a-c) extending in the longitudinal direction of the body, and the curved corners have a bending radius in the interval of 1 - 30mm, and preferably in the interval of 2 - 10mm.

5. The sausage according to claim 4, wherein the distance between one of the corners of the triangle (16,17,18) and the periphery of the sectional area (3a;3b;3c;3d) of the sausage is in the interval of 5 - 20% of the longest side of the triangle and preferably in the interval of 5 -15% of the longest side of the triangle.

6. The sausage according to any of the previous claims, wherein said triangle is equilateral.

## Patentansprüche

1. Würstchen, das einen langgestreckten Körper (1 ;22;24) umfasst, der drei lange Seiten (1a-c) umfasst, die sich in Längsrichtung des Körpers erstrecken, und der Körper weist eine dreieckige Querschnittsfläche auf (3a;3b;3c;3d), die Peripherie der Querschnittsfläche des Körpers weist sechs Punkte (4,5,6,7,8,9) auf, die paarweise durch gerade Linien (10,11,12) verbunden werden können, wobei die Linien ein Dreieck bilden, das die Querschnittsfläche des Würstchens vollständig umschließt, und jede der drei langen Seiten ist mit einer nach innen gebogenen Vertiefung (13,14,15) versehen, die sich entlang der langen Seite in Längsrichtung des Körpers erstreckt und jede der Vertiefungen (13,14,15) erstreckt sich zwischen einem Paar der Punkte, so dass das Würstchen drei stabile Ruhepositionen auf einer ebenen Oberfläche aufweist, und eine längste Seite des Dreiecks weist eine Länge L im Intervall von 20 bis 60 mm auf, **dadurch gekennzeichnet, dass** wenigstens ein Teil jeder der Vertiefungen die Form eines Kreissegments aufweist und der größte Abstand (D) zwischen den genannten geraden Linien und der Peripherie einer Querschnittsfläche (3a;3b;3c;3d) des Würstchens im Intervall von 5 bis 8 % von L liegt.

2. Würstchen nach Anspruch 1, wobei die Querschnittsfläche (3a;3b;3c;3d) des Würstchens entlang eines Hauptteils der Länge des Würstchens konstant ist.

3. Würstchen nach einem der vorstehenden Ansprüche, wobei die Vertiefungen (13,14,15) die gleiche Form aufweisen.

4. Würstchen nach einem der vorstehenden Ansprüche, wobei der Körper (1 ;22;24) drei gerundete Ecken (4a-c) aufweist, die sich in Längsrichtung des Körpers erstrecken, und die gerundeten Ecken einen Biegeradius im Intervall von 1 bis 30 mm, und vorzugsweise im Intervall von 2 bis 10 mm, aufweisen.

5. Würstchen nach Anspruch 4, wobei der Abstand zwischen einer der Ecken des Dreiecks (16,17,18) und der Peripherie der Querschnittsfläche (3a;3b;3c;3d) des Würstchens im Intervall von 5 bis 20 % der längsten Seite des Dreiecks und vorzugsweise im Intervall von 5 bis 15 % der längsten Seite des Dreiecks liegt.

6. Würstchen nach einem der vorstehenden Ansprüche, wobei das genannte Dreieck gleichseitig ist.

## Revendications

1. Saucisse incluant un corps allongé (1 ; 22 ; 24) comprenant trois côtés longs (1a-c) qui s'étendent dans la direction longitudinale du corps, le corps ayant une aire de section triangulaire (3a ; 3b ; 3c ; 3d), la périphérie de l'aire de section du corps comprenant six points (4, 5, 6, 7, 8, 9), qui peuvent être reliés par paires avec des lignes droites (10, 11, 12), lesdites lignes formant un triangle qui entoure entièrement l'aire de section de la saucisse, et chacun desdits trois côtés longs étant muni d'une indentation incurvée vers l'intérieur (13, 14, 15) qui s'étend le long du côté long dans la direction longitudinale du corps et chacune desdites indentations (13, 14, 15) s'étendant entre une paire desdits points de sorte que la saucisse présente trois positions de repos stables sur une surface plane, et un côté le plus long dudit triangle ayant une longueur L dans l'intervalle allant de 20 à 60 mm, **caractérisée en ce qu'**au moins une partie de chacune desdites indentations a la forme d'un segment circulaire, et la distance la plus grande (D) entre lesdites lignes droites et la périphérie d'une aire de section (3a ; 3b ; 3c ; 3d) de la saucisse est dans l'intervalle allant de 5 à 8 % de L.

2. Saucisse selon la revendication 1, dans laquelle l'aire de section (3a ; 3b ; 3c ; 3d) de la saucisse est constante sur une partie principale de la longueur de la saucisse.

3. Saucisse selon l'une quelconque des revendications précédentes, dans laquelle lesdites indentations (13, 14, 15) ont la même forme.

4. Saucisse selon l'une quelconque des revendications précédentes, dans laquelle le corps (1 ; 22 ; 24) possède trois coins incurvés (4a-c) qui s'étendent dans la direction longitudinale du corps, et les coins incurvés ont un rayon de courbure dans l'intervalle allant de 1 à 30 mm, et de préférence dans l'intervalle allant de 2 à 10 mm.

5. Saucisse selon la revendication 4, dans laquelle la distance entre un des coins du triangle (16, 17, 18) et la périphérie de l'aire de section (3a ; 3b ; 3c ; 3d) de la saucisse est dans l'intervalle allant de 5 à 20 % du côté le plus long du triangle et, de préférence, dans l'intervalle allant de 5 à 15 % du côté le plus long du triangle.

6. Saucisse selon l'une quelconque des revendications précédentes, dans laquelle ledit triangle est équilatéral.
